Europäisches Patentamt

European Patent Office

Office européen des brevets

(19)

(11) Numéro de publication : **0 450 246 A1**

(12) # DEMANDE DE BREVET EUROPEEN

(21) Numéro de dépôt : **90420525.9**

(22) Date de dépôt : **04.12.90**

(51) Int. Cl.⁵ : **G01B 9/02**

(30) Priorité : **04.12.89 FR 8916309**

(43) Date de publication de la demande :
**09.10.91 Bulletin 91/41**

(84) Etats contractants désignés :
**DE FR GB**

(71) Demandeur : **ETAT FRANCAIS représenté par
le Ministre des Postes, Télécommunications
et de l'Espace
(CENTRE NATIONAL D'ETUDES DES
TELECOMMUNICATIONS), 38-40 rue du
Général Leclerc
F-92131 Issy-les-Moulineaux (FR)**

(72) Inventeur : **Vareille, Aimé
3, Rue Gabriel Didier
F-38130 Echirolles (FR)**

(74) Mandataire : **de Beaumont, Michel
1bis, rue Champollion
F-38000 Grenoble (FR)**

(54) **Dispositif optique de mesure de distance.**

(57)    La présente invention concerne un dispositif optique de mesure de distance comprenant une source fournissant un faisceau lumineux polarisé (1), des moyens (2) pour séparer ce faisceau en un pinceau de référence (3) et un pinceau de mesure (4), ce pinceau de mesure parcourant un trajet associé à la distance à mesurer, des moyens (2) pour recombiner lesdits pinceaux, des moyens (10) pour conférer à chacun des pinceaux des états de polarisation mutuellement orthogonaux avant de les recombiner, et des moyens (11) pour analyser l'état de polarisation du faisceau recombiné.

Figure 2

EP 0 450 246 A1

## DISPOSITIF OPTIQUE DE MESURE DE DISTANCE

La présente invention concerne un perfectionnement aux interféromètres à deux ondes, plus particulièrement dans le cadre de leur application à la mesure de distances ou de variations de distances.

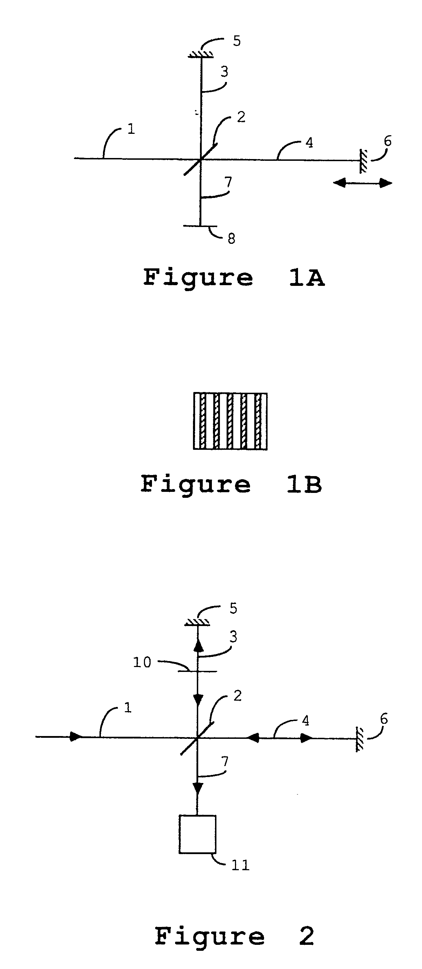

La figure 1A illustre très schématiquement un interféromètre à deux ondes classique, du type interféromètre de Michelson. Un faisceau incident 1 est séparé par une lame séparatrice 2 en un pinceau de référence 3 et un pinceau de mesure 4 qui sont renvoyés vers la lame séparatrice 2 par des réflecteurs, couramment des miroirs 5 et 6 pour être recombinés en un faisceau 7.

Si les chemins optiques parcourus par les pinceaux 3 et 4 sont distincts, un déphasage existe entre les ondes électromagnétiques des pinceaux 3 et 4 et des franges d'interférence apparaissent au niveau d'un plan d' observation 8.

Cette figure d'interférence comprend des franges alternativement claires et sombres telles qu'illustrées très schématiquement en figure 1B.

Un tel interféromètre peut être utilisé pour mesurer des distances, ou plus généralement des variations de distances. Etant donné une position des miroirs 5 et 6, si l'on déplace l'un des miroirs, par exemple le miroir 6 et que l'on observe l'intensité lumineuse au niveau d'une fente placée dans le plan 8, on verra défiler des franges sombres et lumineuses, l'écart entre deux franges sombres correspondant à un déplacement de l'objet sur lequel est fixé le miroir 6 d'une demi longueur d'onde.

Ainsi, par comptage des franges, on peut déterminer le déplacement de l'objet, des interpolations pouvant être effectuées entre deux franges.

Divers perfectionnements ont été apportés pour améliorer la précision de ce type d'appareil (détection synchrone, stabilisation des faisceaux, etc), mais il demeure qu'en pratique la précision des appareils commercialement disponibles est de l'ordre du 48ième de la longueur d'onde et la précision optimale que l'on peut atteindre dans des montages de laboratoire est de l'ordre du millième de frange. Ainsi, si la source lumineuse émet dans le rouge (600 nm), on peut au mieux espérer une précision de l'ordre de 0,3 nm et encore, on concevra que cette précision est fonction de la qualité d'une interpolation.

Ainsi, un objet de la présente invention est d'améliorer les interféromètres à deux ondes classiques pour augmenter leur précision, en particulier dans le cas de la mesure des distances.

Ces objets de la présente invention sont atteints en utilisant un interféromètre à deux ondes classiques et en modifiant la polarisation mutuelle des deux ondes pour qu'elles soient polarisées orthogonalement l'une à l'autre lors de leur recombinaison.

Ainsi, selon la présente invention, le faisceau recombiné ne fournit plus une figure d'interférences mais est constitué d'une onde électromagnétique de polarisation déterminée en fonction du déphasage entre les deux pinceaux. L'état de polarisation du faisceau recombiné peut être analysé par différents appareils connus dans le domaine de la polarimétrie, par exemple des ellipsomètres à lame tournante ou autres analyseurs de polarisation. Comme cela est connu, ces appareils comprennent divers composants dont certains ne sont pas nécessairement disposés en aval du système.

Le fait de déterminer un déphasage entre deux faisceaux lumineux dû à une différence de chemin optique par une analyse de polarisation plutôt que par un comptage de franges augmente considérablement la précision de l'appareil de mesure. En effet, le fait de traduire des variations de chemin optique en variations angulaires de direction de polarisation permet d'atteindre les précisions couramment obtenues dans le domaine de la polarimétrie, c'est-à-dire des précisions de l'ordre du centième de degré. Ainsi, pour un déplacement d'une demi-longueur d'onde on pourra obtenir une précision de l'ordre de la demi longueur d'onde divisée par 360×100, c'est-à-dire une précision qui peut être 36 fois meilleure que celle obtenue par comptage de franges. On a vu précédemment que, pour une longueur d'onde de 600 nm, la précision pouvait être de l'ordre de 0,3 nm avec un interféromètre classique. Elle sera maintenant de l'ordre du centième de nanomètre (un dixième d'angström), c'est-à-dire inférieure aux dimensions atomiques.

Ces objets, caractéristiques et avantages ainsi que d'autres de la présente invention seront exposés plus en détail dans la description suivante de modes de réalisation particuliers faite en relation avec les figures jointes parmi lesquelles:

la figure 1A représente le schéma d'un interféromètre de Michelson classique;

la figure 1B représente les franges d'interférence obtenues par un appareil du type que celui de la figure 1A; et

la figure 2 illustre très schématiquement un appareil mettant en oeuvre la présente invention.

On a représenté en figure 2 un interféromètre de type Michelson avec de mêmes références que celles utilisées en figure 1A.

Les différences essentielles entre le dispositif de la figure 2 et celui de la figure 1A sont que:

– le faisceau lumineux incident 1 est polarisé;

– l'un des bras de l'interféromètre comprend un moyen 10 pour transformer la polarisation incidente en une polarisation orthogonale au moins quand le pinceau lumineux 3 revient sur la lame séparatrice 2 pour se recombiner avec l'autre pinceau 4;

– le dispositif de la figure 2 comprend un analyseur de polarisation 11 qui peut être de tout type connu, par exemple un analyseur à lame quart d'onde tournante.

Dans un cas pratique, le faisceau incident 1 pourra être polarisé de façon rectiligne, par exemple horizontalement. Ce sera par exemple le faisceau d'un laser hélium-néon à 632,8 nm traversant un système afocal pour agrandir le faisceau. La lame séparatrice 2 peut être de tout type connu.

Le système fournissant une polarisation orthogonale peut être une lame quart d'onde 10 orientée à 45° de la direction de la polarisation rectiligne du faisceau incident de façon à fournir en sortie une polarisation circulaire, dont le sens de rotation est inversé après réflexion sur le miroir 5 pour fournir après un deuxième passage dans la lame quart d'onde 10 une polarisation rectiligne orthogonale à la précédente (verticale). Plus généralement, on notera que l'on appelle ici lumières polarisées orthogonalement des lumières polarisées elliptiquement d'éllipticités égales mais opposées et dont les grands axes sont orthogonaux. Des exemples extrêmes de polarisations orthogonales sont deux lumières à polarisations rectilignes croisées, ou deux lumières à polarisations circulaires, respectivement droite et gauche. De telles lumières n'interfèrent pas car elles n'ont jamais de composantes pouvant se combiner scalairement.

Dans l'exemple décrit, le faisceau de sortie 7 de l'interféromètre modifié selon l'invention présente une polarisation elliptique d'axe fixe à 45° de l'horizontale. Le passage de ce rayon au travers d'une lame quart d'onde produit une polarisation rectiligne d'orientation variable. Pour un déplacement du miroir mobile du huitième de la longueur d'onde, la direction de polarisation du rayon tourne exactement de 90°.

A titre d'analyseur de l'état de polarisation, de nombreux analyseurs connus peuvent être utilisés, par exemple un analyseur à lame quart d'onde tournante, ou un analyseur comprenant une lame quart d'onde convenablement orientée par rapport à l'autre lame quart d'onde et à la direction initiale de polarisation du faisceau suivie de cinq détecteurs sur lesquels sont envoyés des parties du faisceau de sortie, chacun des détecteurs étant respectivement précédé d'un polariseur horizontal, d'un polariseur vertical, d'un polariseur à 45° de l'horizontale et d'un polariseur à 135° de l'horizontale, le dernier détecteur recevant directement la lumière d'une partie du faisceau de sortie.

En outre, comme cela est connu de l'homme de l'art, on pourra utiliser des systèmes à détection synchrone ainsi que des faisceaux de référence pour s'affranchir de variations éventuelles d'intensité du faisceau de la source.

La présente invention a été décrite ci-dessus dans le cadre d'une modification d'un interféromètre à deux ondes du type interféromètre de Michelson.

L'homme de l'art notera qu'elle s'applique plus généralement à tout interféromètre à deux ondes dans lequel l'état de polarité respectif des deux ondes est rendu orthogonal avant recombinaison de ces ondes, d'où il résulte qu'au lieu d'analyser un système de franges, on analyse des modifications d'un état de polarisation d'un faisceau de sortie recombiné.

## Revendications

1.  Interféromètre à deux ondes, caractérisé en ce qu'il comprend des moyens pour polariser l'une des ondes orthogonalement à l'autre avant de recombiner ces ondes et des moyens pour analyser l'état de polarisation du faisceau de sortie.

2.  Dispositif optique de mesure de distance comprenant:

    une source fournissant un faisceau lumineux polarisé (1),

    des moyens (2) pour séparer ledit faisceau en un pinceau de référence (3) et un pinceau de mesure (4), ce dernier pinceau parcourant un trajet associé à la distance à mesurer,

    des moyens (2) pour recombiner lesdits pinceaux, caractérisé en ce qu'il comprend en outre:

    des moyens (10) pour conférer à chacun des pinceaux des états de polarisation mutuellement orthogonaux avant de les recombiner, et

    des moyens (11) pour analyser l'état de polarisation du faisceau recombiné.

3.  Dispositif optique de mesure de distance selon la revendication 2, caractérisé en ce que le pinceau de mesure (4) frappe un réflecteur (6) solidaire d'une pièce dont on veut mesurer la position et/ou le déplacement avant de revenir dans les moyens de recombinaison.

4.  Dispositif optique de mesure de distance selon la revendication 2 ou 3, caractérisé en ce que:

    la source fournit un faisceau à polarisation rectiligne selon une première direction,

    cette polarisation est maintenue dans l'un des pinceaux de mesure ou de référence, et

    cette polarisation est transformée en une polarisation rectiligne selon une direction orthogonale à la première dans l'autre des pinceaux.

5.  Dispositif selon la revendication 4, caractérisé en ce que l'orthogonalité des polarisations est obtenue en faisant passer l'un des pinceaux par une lame quart d'onde dont les axes sont à 45° de la direction de polarisation initiale du pinceau, puis en faisant revenir le faisceau sur cette lame quart d'onde après passage par un miroir plan.

Figure 1A

Figure 1B

Figure 2

Office européen
des brevets

**RAPPORT DE RECHERCHE EUROPEENNE**

Numero de la demande

EP 90 42 0525

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 881 823 (H. DE LANG)<br>* Colonne 2, ligne 35 - colonne 4, ligne 64; figures 1,2 *<br>--- | 1-5 | G 01 B 9/02 |
| X | ALLIED PHYSICS LETTERS, vol. 29, no. 3, 1 août 1976, pages 183-185; D. VILKOMERSON: "Measuring pulsed picometer-displacement vibrations by optical interferometry"<br>--- | 1-5 | |
| A | OPTICS AND LASER TECHNOLOGY, no. 3, juin 1987, pages 158-160; M.E. PLEYDELL: "Non-contacting laser based displacement measurements from solid objects"<br>----- | 1-3 | |

**DOMAINES TECHNIQUES RECHERCHES (Int. Cl.5)**

G 01 B

Le présent rapport a été établi pour toutes les revendications

| Lieu de la recherche | Date d'achèvement de la recherche | Examinateur |
|---|---|---|
| LA HAYE | 26-06-1991 | PANDOLFI C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

6